# EUROPÄISCHE PATENTANMELDUNG

(11) **EP 3 456 932 A1**
(43) Veröffentlichungstag der Anmeldung: **20.03.2019**
(21) Anmeldenummer: 18195113.8
(22) Anmeldetag: 18.09.2018
(51) Int. Cl.: F01D 25/16, F01D 25/34, F16C 17/20

(54) **TURBOMASCHINE SOWIE VERFAHREN ZUM BETREIBEN EINER TURBOMASCHINE IM DREHBETRIEB**

(30) Priorität: 19.09.2017 DE 102017216563
(71) Anmelder: Siemens Aktiengesellschaft, 80333 München (DE)
(72) Erfinder: Leidinger, Bernd, 01159 Dresden (DE)

(57) **Zusammenfassung**

Die Erfindung betrifft eine Turbomaschine mit wenigstens einem Turbinenrotor (1) sowie wenigstens zwei Gleitlagern (2) zur drehbaren Lagerung des Turbinenrotors (1). Desweiteren sind wenigstens zwei Rollenböcke (3) vorgesehen, die so ausgebildet sind, dass sie bei Bedarf den Turbinenrotor (1) anheben und drehbar lagern können, so dass kein Kontakt mehr zwischen dem Turbinenrotor (1) und dem Gleitlager (2) besteht.

## Beschreibung

Die Erfindung betrifft eine Turbomaschine nach dem Oberbegriff des unabhängigen Patentanspruchs 1 sowie ein Verfahren zum Betreiben einer Turbomaschine im Drehbetrieb nach dem Oberbegriff des unabhängigen Patentanspruchs 5.

Bei Turbomaschinen, nachfolgend auch als Turbinen bezeichnet, die häufig an- und abgefahren werden müssen, bspw. bei Dampfturbinen in Solarkraftwerken, ist es für die Betriebsführung, den Wirkungsgrad und die Lebensdauer der Turbine wichtig, ein unkontrolliertes Auskühlen der Komponenten der Turbine während der Stillstandszeiten, bspw. der nächtlichen Stillstandzeiten bei Solarkraftwerken, zu begrenzen.

Während dies für Turbinengehäuse z.B. durch elektrische Heizungen und verstärkte Isolierungen gut gelingt, wird dem Turbinenrotor über die zu kühlenden Gleitlager intensiv Wärme entzogen. Die Gleitlager werden während des Auskühlvorgangs üblicherweise mit Schmieröl gekühlt. Die damit verbundene Auskühlung des Turbinenrotors über die Lagerstellen muss dabei bislang in Kauf genommen werden. Um ein ungleichmäßiges Auskühlen des Turbinenrotors zu vermeiden wird der Turbinenrotor während der Stillstandszeit mit niedriger Drehzahl in sogenannten Drehbetrieb kontinuierlich gedreht. Dies erfolgt mit Hilfe einer speziellen Drehvorrichtung.
Im Ergebnis hat der Turbinenrotor jedoch nach der Stillstandszeit eine niedrige Bauteiltemperatur, was zu längeren Anfahrzeiten und damit zu einer Verringerung des Wirkungsgrades der Turbine führt.

Ausgehend von dem zuvor beschriebenen Problem ist es Aufgabe der Erfindung, eine Turbomaschine bereitzustellen, bei der das Auskühlen des Turbinenrotors über die Gleitlager verhindert oder zumindest reduziert wird. Zudem ist es Aufgabe der vorliegenden Erfindung ein Verfahren zum Betreiben einer Turbomaschine während der Stillstandszeiten zu beschreiben, welches ein Auskühlen des Turbinenrotors über die Gleitlager verhindert oder zumindest reduziert.

Die Aufgabe wird hinsichtlich der Turbomaschine durch die Merkmale des unabhängigen Patentanspruchs 1 und hinsichtlich des Verfahrens durch die Merkmale des unabhängigen Patentanspruchs 5 gelöst.

Vorteilhafte Ausgestaltungen der Erfindung, die einzeln oder in Kombination miteinander einsetzbar sind, sind Gegenstand der Unteransprüche.

Die erfindungsgemäße Turbinenmaschine, umfassend wenigstens einen Turbinenrotor sowie wenigstens zwei Gleitlager zur drehbaren Lagerung des Turbinenrotors, zeichnet sich dadurch aus, dass wenigstens zwei Rollenböcke vorgesehen sind, die so ausgebildet sind, dass sie bei Bedarf den Turbinenrotor anheben und drehbar lagern können, so dass kein Kontakt mehr zwischen dem Turbinenrotor und dem Gleitlager besteht. Durch das Anheben des Turbinenrotors kann ein unkontrolliertes Abkühlen des Turbinenrotors, insbesondere im Bereich des Lagerzapfens wirkungsvoll verhindert werden. Hierdurch wird während der Stillstandszeiten/des Drehbetriebs ein schnelles Auskühlen des Turbinenrotors verhindert, wodurch ein schnelleres Anfahren der Turbine nach der Stillstandszeit möglich wird. Stillstandszeiten treten bspw. bei Solarkraftwerken während der Nachtstunden auf. Der Turbinenrotor kann bereits beim Herunterfahren der Turbine von den Rollenböcken angehoben werden und in den Rollenböcken auslaufen. Üblicherweise wird der Turbinenrotor nicht bis zum Stillstand herunter gefahren, sondern wie bereits beschrieben in einem Drehbetrieb gefahren. Dies bedeutet, dass der Turbinenrotor mittels eines Antriebes während der Stillstandszeit mit niedriger Geschwindigkeit rotiert, um eine Verkrümmung des Turbinenrotors infolge ungleichmäßiger Abkühlung zu verhindern. Der zum Drehbetrieb notwendige Antrieb kann in den Rollenböcken integriert werden.

Eine Ausgestaltung der Erfindung sieht vor, dass die Rollenböcke derart ausgebildet sind, dass die Rollenböcke ein Anheben des Turbinenrotors in eine zentrische Position innerhalb des jeweiligen Gleitlagers ermöglichen. Durch die zentrische Position, ist der Abstand zwischen dem Turbinenrotor und den Gleitlagern weitgehend über den gesamten Umfang gleich, wodurch sich eine gleichmäßige Wärmeverteilung einstellt und wodurch eine gleichmäßige Abkühlung gewährleistet ist.

Eine weitere Ausgestaltung der Erfindung sieht vor, dass die Gleitlager mittels Kühlkanälen, welche in den Gleitlagern ausgebildet sind, kühlbar sind. Durch die Kühlung der Gleitlager werden die Gleitlagerkörper gegen vom Lagerzapfen des Turbinenrotors kommende Strahlungswärme geschützt.

Das erfindungsgemäße Verfahren zum Betreiben einer Turbomaschine im Drehbetrieb ist gekennzeichnet durch die folgenden Verfahrensschritte:
- in Eingriff bringen des Rollenbocks mit dem Turbinenrotor,
- Anheben des Turbinenrotors mittels des Rollenbocks,
- Positionieren des Turbinenrotors im Gleitlager, so dass der Turbinenrotor keinen Kontakt mit dem Gleitlager hat,
- Drehen des Turbinenrotors während der Lagerung im Rollenbock.

Das erfindungsgemäße Verfahren ermöglicht es, den Turbinenrotor, sobald die Turbine keine Arbeit verrichtet, mittels der Rollenböcke anzuheben. Hierdurch wird der Kontakt zwischen den Gleitlagern und dem Turbinenrotor unterbrochen und ein unkontrolliertes Abkühlen des Turbinenrotors vermieden. Dies ermöglicht ein schnelleres Wiederanfahren und Inbetriebnehmen der Turbomaschine.

Ein weiteres Verfahren zum Betreiben einer Turbomaschine sieht vor, dass der Turbinenrotor mittels der Rollenböcke so angehoben wird, dass er zentrisch in den Gleitlagern positioniert ist. Durch die zentrische Lagerung erfolgt wie bereits oben beschrieben, eine gleichmäßigere Wärmeabstrahlung und ein damit verbundenes gleichmäßigeres Abkühlen des Turbinenrotors, wodurch ein Verzug des Turbinenrotors weitgehend verhindert werden kann.

Ein weiteres Verfahren zum Betreiben einer Turbomaschine sieht vor, dass eine Reduzierung oder ein vollständiges Abstellen einer Ölversorgung/Schmiermittelversorgung des Gleitlagers während des Drehbetriebs erfolgt. Aufgrund des Anhebens des Turbinenrotors ist eine Öl-/Schmiermittelversorgung des Gleitlagers während des Drehbetriebs nicht notwendig.

Um das Gleitlager gegen vom Lagerzapfen des Turbinenrotors kommende Strahlungswärme zu schützen, sieht ein weiteres Verfahren zum Betreiben einer Turbomaschine vor, das Gleitlager mittels eines Kühlfluides, welches durch die Kühlkanäle im Gleitlager geleitet wird, zu kühlen.

Ausführungsbeispiele und weitere Vorteile der Erfindung werden im Folgenden anhand der Zeichnungen erläutert. Es zeigen:
- Figur 1: eine schematische Darstellung der erfindungsgemäßen Turbomaschine;
- Figur 2: ein erstes Ausführungsbeispiel eines Rollenbocks für eine erfindungsgemäße Turbinenmaschine entsprechend Figur 1;
- Figur 3: ein zweites Ausführungsbeispiel eines Rollenbocks für eine erfindungsgemäße Turbinenmaschine nach Figur 1.

Bei den Figuren handelt es sich um stark vereinfachte Darstellungen, bei denen im Wesentlichen nur die zur Beschreibung der Erfindung notwendigen Bauteile gezeigt sind. Gleiche bzw. funktionsgleiche Bauteile sind figurübergreifend mit denselben Bezugszeichen versehen.

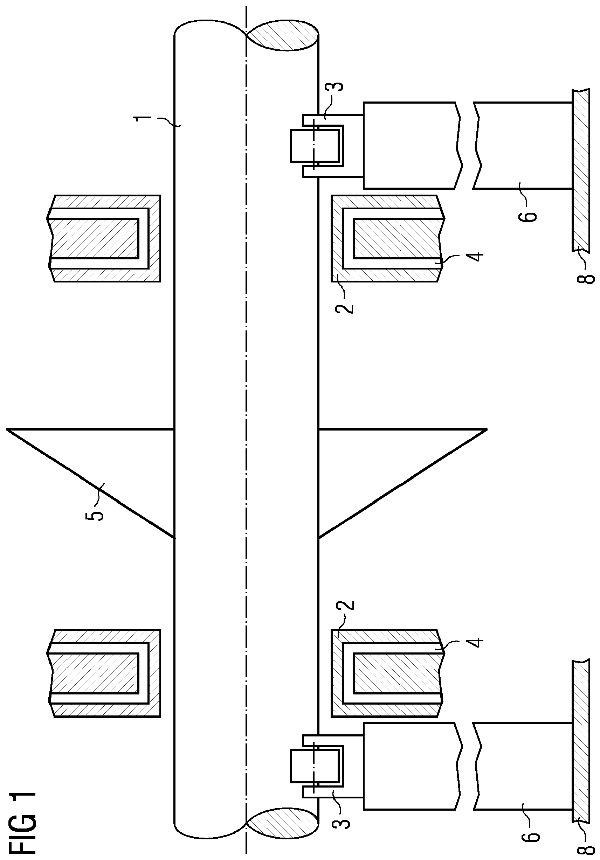

Figur 1 zeigt eine Turbomaschine, bspw. eine Dampfturbine in stark vereinfachter Darstellung. Die Turbomaschine umfasst einen Turbinenrotor 1 sowie wenigstens zwei Gleitlager 2 zur drehbaren Lagerung des Turbinenrotors 1. Auf dem Turbinenrotor 1 ist wenigstens eine Turbinenstufe 5, umfassend wenigstens eine Leitschaufel- und eine Laufschaufelreihe, angeordnet. Die Turbomaschine umfasst desweiteren zwei Rollenböcke 3, die jeweils in der Nähe der Gleitlager 2 angeordnet sind und die so ausgebildet sind, dass sie bei Bedarf den Turbinenrotor 1 anheben und drehbar lagern können. Der Rollenbock 3 ist mit einer sowohl in horizontaler als auch in vertikaler Richtung verstellbaren Traverse 6 verbunden. Durch Verschieben der Traverse 6 kann der Rollenbock 3 in Eingriff mit dem Turbinenrotor 1 gebracht und den Turbinenrotor 1 anheben und drehbar lagern. Durch das Anheben des Turbinenrotors 1 über den Rollenbock 3 wird der Kontakt zwischen dem Turbinenrotor 1 und dem Gleitlager 2 unterbrochen. Hierdurch wird ein unkontrolliertes Auskühlen des Turbinenrotors 1 verhindert. Das Anheben des Turbinenrotors 1 erfolgt immer dann, wenn die Turbomaschine keine Arbeit leistet, jedoch ein schnelles Auskühlen der Turbomaschinenkomponenten vermieden werden soll, um ein schnelles Anfahren der Turbomaschine wieder zu ermöglichen. Ein typischer Anwendungsfall ist bspw. das Betreiben einer Dampfturbine in einem Solarkraftwerk, bei dem aufgrund fehlender Sonneneinstrahlung während der Nachtzeiten die Dampfturbine keine Arbeit leisten kann, jedoch mit Tagesanbruch schnell wieder in Betrieb genommen werden soll. Das Verschieben des Rollenbocks 3 über die Traverse 6 erfolgt vorzugsweise so, dass der Turbinenrotor 1 sich in einer zentrischen Position innerhalb des jeweiligen Gleitlagers 2 befindet. Durch die zentrische Position hat der Turbinenrotor 1 überall den gleichen Abstand zum Gleitlager 2, so dass eine gleichmäßige Wärmeabstrahlung und damit ein gleichmäßiges Auskühlen des Turbinenrotors 1 gewährleistet ist und eine Verkrümmung des Turbinenrotors 1 infolge ungleichmäßigen Abkühlens verhindert wird. Um die Verkrümmung des Turbinenrotors 1 beim Auskühlen zu vermeiden, wird der Turbinenrotor 1 im sogenannten Drehbetrieb bewegt. Dabei rotiert der Turbinenrotor 1 gleichmäßig mit langsamer Geschwindigkeit im Rollenbock 3. Der Drehantrieb kann direkt im Rollenbock 3 oder auch separat vorgesehen werden. Da nach dem Anheben des Turbinenrotors 1 kein Kontakt mehr zwischen dem Turbinenrotor 1 und dem Gleitlager 2 besteht, kann die Ölversorgung des Gleitlagers 2 reduziert oder vollständig abgeschaltet werden. Um die Hitzeeinwirkung vom Turbinenrotor 1 auf das Gleitlager 2 nicht zu groß werden zu lassen, sind in den Gleitlagern 2 Kühlkanäle 4 ausgebildet, über die das Gleitlager 2 mittels eines Kühlfluides, welches durch Kühlkanäle 4 im Gleitlager 2 geleitet wird, gekühlt werden kann.

Nachfolgend wird kurz das Verfahren zum Betreiben einer Turbine 1 im Drehbetrieb bzw. der Übergang vom Nennbetrieb in den Drehbetrieb beschrieben. Sobald der Nennbetrieb, unterbrochen wird, und die Turbomaschine 1 keine Arbeit mehr verrichtet und herunter gefahren wird, wird der Rollenbock 3 mit dem Turbinenrotor 1 in Eingriff gebracht. Durch weiteres Verfahren des Rollenbocks 3 wird der Turbinenrotor 1 angehoben, so dass kein Kontakt mehr zwischen dem Gleitlager 2 und dem Turbinenrotor 1 besteht. Dabei wird der Turbinenrotor 1 vorzugsweise so angehoben, dass er zentrisch im Gleitlager 2 positioniert ist. Nach dem Anheben des Turbinenrotors 1 erfolgt der Drehbetrieb, d.h. der Turbinenrotor 1 wird mit niedriger Drehzahl im Rollenbock 3 rotiert. Die Ölversorgung/Schmiermittelversorgung des Gleitlagers 2 kann reduziert bzw. vollständig abgestellt werden. Zum Schutz des Gleitlagers 2 gegen die vom Turbinenrotor 2 kommende Strahlungswärme wird das Gleitlager 2 mittels eines Kühlfluids, welches durch die Kühlkanäle 4 im Gleitlager 2 geleitet wird, gekühlt. Um den Turbinenrotor 1 beim Start der Turbine wieder in Kontakt mit dem Gleitlager 2 zu bringen, wird der Rollenbock 3 wieder heruntergefahren, so dass der Turbinenrotor 2 im Gleitlager 2 zum Liegen kommt. Der Rollenbock 3 ist während des Nennbetriebes der Turbomaschine in einer Position, in der er in keinen Kontakt mit dem Turbinenrotor 2 steht.

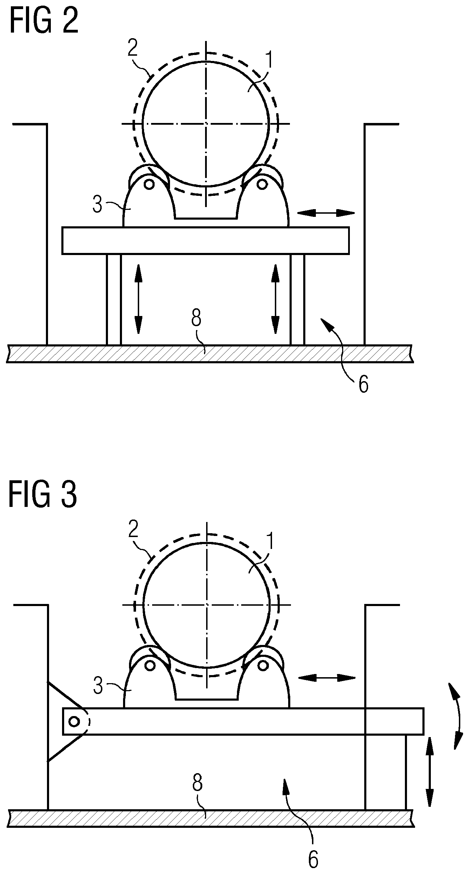

Figur 2 zeigt ein Ausführungsbeispiel eines Rollenbocks 3, welcher auf einer Traverse 6 angeordnet ist. Der Rollenbock 3 dient zum Anheben und zur drehbaren Lagerung des Turbinenrotors 1. Hierzu kann der Rollenbock 1 über die Traverse 6 sowohl in horizontaler als auch in vertikaler Richtung verschoben werden. Die Traverse 6 ist vorzugsweise fest mit dem Turbinengehäuse 7 verbunden. Durch die feste Verbindung der Traverse 6 ergibt sich eine besonders feste und stabile Ausführung. Die Traverse 6 kann dabei bspw. hydraulisch, pneumatisch, elektrisch oder händisch verstellbar ausgebildet sein. Der Rollenbock 3 wird mittels der Traverse 6 so verfahren, dass der Turbinenrotor 1 vorzugsweise zentrisch innerhalb des Gleitlagers 2 positioniert ist. Das Antreiben des Turbinenrotors 1 in Drehbetrieb kann direkt über die Rollen des Rollenbocks 3 erfolgen, falls diese angetrieben werden. Hierzu kann bspw. ein Motor im Rollenbock 3 vorgesehen sein.

Figur 2 zeigt ein zweites Ausführungsbeispiel eines Rollenbocks 3. Der Rollenbock 3 ist dabei auf einer schwenkbaren Traverse 6 montiert, welche vorzugsweise an einer Seite des Turbinengehäuses 7 angeordnet ist. Durch das Schwenken der Traverse 6 bewegt sich der Rollenbock 3 sowohl in einer vertikalen als auch in einer horizontalen Richtung. Die exakte Ausrichtung in vertikaler Richtung kann mittels eines verstellbaren Rollenbocks 3 erfolgen. Der Rollenbock 3 ist dabei in Längsrichtung zur Traverse 6 verstellbar.

Zusammenfassend kann festgestellt werden, dass durch die erfindungsgemäße Turbomaschine ein unkontrolliertes und schnelles Auskühlen der Turbomaschinenkomponenten während des Drehbetriebs verhindert werden kann. Hierdurch ist ein schnelleres Anfahren der Turbomaschine möglich, wodurch sich eine Wirkungsgradsteigerung der Turbomaschine ergibt.

## Patentansprüche

1. Turbomaschine, umfassend wenigstens einen Turbinenrotor (1) sowie wenigstens zwei Gleitlager (2) zur drehbaren Lagerung des Turbinenrotors (1),
**dadurch gekennzeichnet, dass**
wenigstens zwei Rollenböcke (3) vorgesehen sind, die so ausgebildet sind, dass sie bei Bedarf den Turbinenrotor (1) anheben und drehbar lagern können, so dass kein Kontakt mehr zwischen dem Turbinenrotor (1) und den Gleitlagern (2) besteht.

2. Turbomaschine nach Anspruch 1,
**dadurch gekennzeichnet, dass**
die Rollenböcke (3) derart ausgebildet sind, dass die Rollenböcke (3) ein Anheben des Turbinenrotors (1) in eine zentrische Position innerhalb des jeweiligen Gleitlagers (2) ermöglichen.

3. Turbomaschine nach einem der vorherigen Ansprüche, **dadurch gekennzeichnet, dass** die Gleitlager (2) mittels Kühlkanälen (4), welche in den Gleitlagern (2) ausgebildet sind, kühlbar sind.

4. Turbomaschine nach einem der vorherigen Ansprüche, **dadurch gekennzeichnet, dass**
die Turbomaschine eine Dampfturbine ist.

5. Verfahren zum betreiben einer Turbomaschine im Drehbetrieb, **gekennzeichnet durch** die nachfolgenden Verfahrensschritte:
- In Eingriff bringen des Rollenbocks (3) mit dem Turbinenrotor (1);
- Anheben des Turbinenrotors (1) mittels des Rollenbocks (3) ;
- Positionieren des Turbinenrotors (1) im Gleitlager (2), so dass der Turbinenrotor (1) keinen Kontakt mit dem Gleitlager (2) hat;
- Drehen des Turbinenrotors (1) während der Lagerung im Rollenbock (3).

6. Verfahren zum betreiben einer Turbomaschine im Drehbetrieb nach Anspruch 5,
**dadurch gekennzeichnet, dass**
der Turbinenrotor (1) mittels der Rollenböcke (3) so angehoben wird, dass er zentrisch in den Gleitlagern (2) positioniert ist.

7. Verfahren zum betreiben einer Turbomaschine im Drehbetrieb nach Anspruch 5 oder 6,
**gekennzeichnet, durch**
eine Reduzierung oder ein vollständiges Abstellen einer Ölversorgung/Schmiermittelversorgung des Gleitlagers (2) während des Drehbetriebs.

8. Verfahren zum betreiben einer Turbomaschine im Drehbetrieb einem der Ansprüche 5 bis 7,
**dadurch gekennzeichnet, dass** das Gleitlager (2) mittels eines Kühlfluids, welches durch die Kühlkanäle (4) im Gleitlager (2) geleitet wird, gekühlt wird.
